# FASCICULE DE BREVET EUROPEEN

(11) **EP 2 086 806 B1**
(45) Date de publication et mention de la délivrance du brevet: **21.03.2018**
(21) Numéro de dépôt: 07866512.2
(22) Date de dépôt: 29.10.2007
(51) Int. Cl.: B60W 20/00, B60K 6/48, B60K 6/485, B60K 6/52, B60W 10/06, B60W 10/08, B60W 10/26

(54) **PROCEDE DE PILOTAGE D'UN VEHICULE HYBRIDE POUR LA RECHARGE DE MOYENS DE STOCKAGE D'ENERGIE ELECTRIQUE ET VEHICULE HYBRIDE**
STEUERUNGSVERFAHREN EINES HYBRIDFAHRZEUGS FÜR AUFLADUNG DES ELEKTRISCHEN ENERGIESPEICHERS UND HYBRIDFAHRZEUG
METHOD FOR CONTROLLING A HYBRID VEHICLE FOR RECHARGING THE ELECTRIC ENERGY STORAGE MEANS AND HYBRID VEHICLE

(30) Priorité: 07.11.2006 FR 0654752
(43) Date de publication de la demande: 12.08.2009
(73) Titulaire: PSA Automobiles SA, 78300 Poissy (FR)
(72) Inventeur: DELISLE, Xavier, 78280 Guyancourt (FR); CALMELS, David, 78300 Poissy (FR); BASSO, Vincent, 91640 Briis sous Forges (FR)
(86) Numéro de dépôt international: PCT/FR2007/052270
(87) Numéro de publication internationale: WO 2008/056076

(56) Documents cités:
- EP-A- 1 236 603
- US-A1- 2002 007 974
- US-A1- 2002 139 592

## Description

L'invention concerne les véhicules du type comportant une chaîne de traction conventionnelle à groupe motopropulseur (ou GMP) comportant une chaîne de traction dite thermique comportant un moteur thermique sur le train avant du véhicule et, une chaîne de traction électrique sur le train arrière comportant au moins une machine électrique..

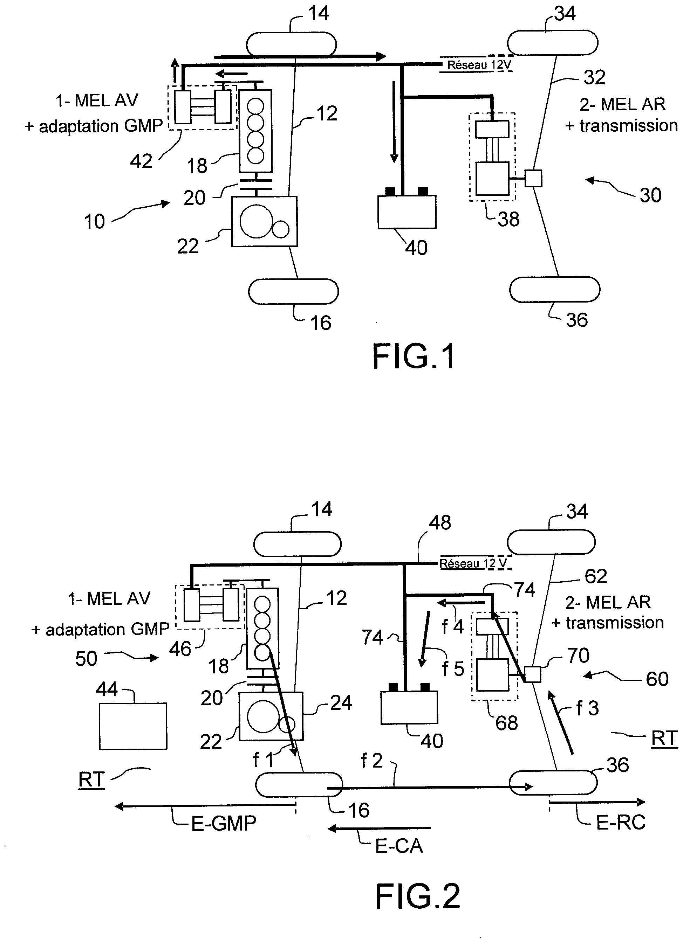

La figure 1 montre une architecture simplifiée d'un tel véhicule qui est par la suite qualifié de véhicule hybride : moteur thermique et machine électrique sur train avant coopérant avec une machine électrique sur le train arrière.

Le véhicule hybride de la figure 1 comporte une chaîne de traction conventionnelle, ou chaîne de traction thermique 10, ayant un train avant 12 comportant deux roues motrices avant 14, 16 entraînées en rotation par le couple fourni par le moteur thermique 18 par l'intermédiaire d'un organe de couplage, par exemple un embrayage 20 et d'une boîte de vitesses 22.

Une machine électrique avant 42 est couplée au moteur thermique pour assurer au moins son redémarrage.

Le véhicule hybride comporte également une chaîne de traction électrique 30 sur le train arrière 32 du véhicule comportant deux roues motrices arrière 34, 36 couplées mécaniquement à une machine électrique de traction 38.

La chaîne de traction électrique 30 est couplée électriquement aux moyens de stockage d'énergie électrique 40.

On utilisera par la suite le terme batterie pour définir tous moyens de stockage de l'énergie électrique. (batterie d'accumulateurs ou pack batterie, super capacité, ...)

La caisse du véhicule est reliée mécaniquement aux trains avant et arrière du véhicule par des dispositifs de suspension non représentés sur la figure.

Sur un véhicule hybride de l'état de l'art équipé train arrière électrique, le moyen utilisé pour recharger la batterie de stockage d'énergie 40 avec le moteur thermique 18 est une machine électrique couplée mécaniquement au moteur thermique. Pour traiter cette situation de vie, il est donc nécessaire d'intégrer au niveau du GMP avant (chaîne de traction avant) une deuxième machine électrique avec une capacité de génération électrique suffisante pour recharger la batterie en complément du train arrière.

La mise en place d'une deuxième machine électrique comporte l'inconvénient d'augmenter le coût du véhicule, en outre, cette intégration présente des difficultés du fait de l'augmentation des contraintes dimensionnelles dans le compartiment moteur.

Le document EP-A-1236603 divulgue un dispositif d'entraînement pour un véhicule comprenant un moteur fournissant une force d'entraînement primaire à un arbre d'entraînement et une unité électrique auxiliaire reliée au moteur à combustion interne par une transmission, l'unité électrique auxiliaire procurant une seconde force d'entraînement à l'arbre d'entraînement pendant un changement de vitesses.

Pour éviter l'implantation d'une deuxième machine électrique de forte capacité au niveau du GMP, l'invention propose un procédé de pilotage d'un véhicule hybride comportant :
- une chaîne de traction thermique comportant un train avant, un moteur thermique couplé par un organe de couplage à une boîte de vitesses destinée à transmettre au train avant, par une transmission avant, une puissance de traction du véhicule pour différents rapports de démultiplication de la boîte de vitesses, au moins une machine électrique avant couplée au moteur thermique assurant au moins son démarrage,
- une chaîne de traction électrique comportant un train arrière, au moins une machine électrique arrière couplée mécaniquement, par une transmission arrière, au train arrière,
- au moins un réseau électrique de puissance reliant la machine électrique arrière à des moyens de stockage d'énergie électrique,
- un moyen de commande pour piloter la chaîne de traction thermique, la chaîne de traction électrique, les moyens de stockage d'énergie électrique, pour tenir compte de toutes les situations de vie du véhicule,
remarquable en ce que la chaîne de traction thermique, la chaîne de traction électrique, les moyens de stockage d'énergie, sont commandés via les moyens de commande pour transmettre de la puissance fournie par la chaîne de traction thermique, via la route sur laquelle roule le véhicule, à la chaîne de traction électrique pour recharger les moyens de stockage d'énergie, le procédé consistant lorsque le véhicule roule, entraîné par le moteur thermique, à piloter la machine électrique arrière pour prélever, par le train arrière du véhicule, une partie de la puissance de traction du véhicule fournie par le moteur thermique du véhicule tout en maintenant une vitesse et/ou une accélération demandée par le conducteur.

Dans une réalisation, le procédé consiste :
- dans une première étape, à configurer la machine électrique arrière en générateur de courant électrique et à partir du couple résistif induit, à transformer le couple résistif en puissance électrique pour recharger les moyens de stockage d'énergie via le réseau électrique de puissance.
- dans une deuxième étape, à piloter la chaîne de traction thermique pour qu'elle fournisse la puissance de traction nécessaire pour conserver la vitesse et l'accélération demandée par le conducteur et effectuer de plus, la recharge les moyens de stockage d'énergie.

Dans cette réalisation, le procédé consiste à commander la chaîne de traction thermique pour compenser le couple résistif, l'ensemble des pertes au niveau des transmissions avant et arrière, et les pertes dues aux pneus des roues avant et arrière.

Dans une autre réalisation du procédé, lorsque le moteur thermique est utilisé par le conducteur, au maximum de son potentiel de puissance, le procédé comporte une étape d'arrêt de la recharge des moyens de stockage d'énergie par la machine électrique arrière.

Dans cette autre réalisation du procédé, l'étape d'arrêt de la recharge des moyens de stockage d'énergie comporte les étapes suivantes consistant :
- dans une première étape, à piloter la machine électrique arrière pour annuler le prélèvement de couple résistif sur le train arrière ;
- dans une deuxième étape, à piloter la chaîne de traction thermique pour fournir la puissance de traction nécessaire pour conserver la vitesse et l'accélération demandée par le conducteur.

Le procédé de pilotage, selon l'invention, d'un véhicule hybride est basé sur une stratégie consistant à transmettre de la puissance, via la route sur laquelle roule le véhicule, du GMP vers la machine électrique associée à la chaîne de traction électrique arrière pour recharger la batterie. Cette stratégie est mise en oeuvre par un procédé de pilotage du véhicule hybride dépendant des situations de vie du véhicule, notamment selon la puissance demandée par le conducteur au moteur thermique.

Dans un mode de fonctionnement du véhicule hybride selon l'invention, il peut être nécessaire de recharger la batterie avec une puissance donnée. La machine électrique arrière est alors pilotée pour prélever une puissance mécanique (ou couple résistif) au niveau du train arrière du véhicule et transformer cette puissance mécanique en puissance électrique pour recharger la batterie.

Cette puissance mécanique, prélevée au niveau du train arrière pour recharger la batterie, tend à ralentir le véhicule et le moteur thermique doit alors être commandé pour compenser ce ralentissement, pour fournir une puissance mécanique additionnelle de manière que le véhicule conserve la vitesse et l'accélération demandée par le conducteur et ce, de façon transparente pour le conducteur.

L'invention concerne également un véhicule hybride pour la mise en oeuvre du procédé de pilotage selon l'invention, caractérisé en ce qu'il comporte :
- une chaîne de traction thermique comportant un train avant, un moteur thermique couplé par un organe de couplage à une boîte de vitesses destinée à transmettre au train avant, par une transmission avant, une puissance de traction du véhicule pour différents rapports de démultiplication de la boîte de vitesses, au moins une machine électrique avant couplée au moteur thermique assurant au moins son démarrage,
- une chaîne de traction électrique comportant un train arrière, au moins une machine électrique arrière couplée mécaniquement, par une transmission arrière, au train arrière,
- au moins un réseau électrique de puissance reliant la machine électrique arrière à des moyens de stockage d'énergie électrique,
- un moyen de commande pour piloter la chaîne de traction thermique, la chaîne de traction électrique, les moyens de stockage d'énergie électrique, pour tenir compte de toutes les situations de vie du véhicule.

L'invention sera mieux comprise par une description du procédé pour la mise en oeuvre de la stratégie de pilotage d'un véhicule hybride en référence aux figures indexées dans lesquelles :
- la figure 1, déjà décrite, représente une architecture simplifiée d'un véhicule hybride de l'état de l'art ;
- la figure 2 ; représente un véhicule hybride pour la mise en oeuvre du procédé de pilotage selon l'invention et ;
- la figure 3, représente des courbes de puissance des éléments du véhicule de la figure 2 en fonction du temps.

Sur ces figures, les mêmes références sont utilisées pour désigner les mêmes éléments.

La figure 2 représente un exemple de véhicule hybride mettant en oeuvre le procédé de pilotage selon l'invention.

Le véhicule hybride de la figure 2 comporte une chaîne de traction thermique 50 conventionnelle. Cette chaîne de traction thermique comporte un train avant 12, un moteur thermique 18 couplé par un embrayage 20 à une boîte de vitesses mécanique 22 destinée à transmettre au train avant 12, par une transmission avant 24, une puissance de traction du véhicule pour différents rapports de démultiplication de la boîte de vitesses 22. Une machine électrique avant 46 est couplée mécaniquement au moteur thermique 18 pour assurer son démarrage et fournir un courant d'alimentation, par un réseau de distribution 48, notamment aux équipements électriques du véhicule.

Le véhicule hybride comporte, en outre, une chaîne de traction électrique 60 comportant un train arrière 62 avec des roues arrière 34, 36. Une machine électrique arrière 68 est couplée mécaniquement, par une transmission arrière 70, au train arrière 62.

Par transmission, on entend généralement un différentiel, ou pont différentiel, associé aux arbres de transmission reliés aux roues.

Un réseau électrique de puissance 74, connecté au réseau de distribution 48, relie la machine électrique arrière 68 à la batterie de stockage d'énergie 40.

Le véhicule hybride comporte les commandes habituelles d'un véhicule telles qu'une commande d'accélération, par exemple, une pédale d'accélérateur et, une commande des freins par exemple, une pédale de frein, non représentées.

L'architecture du véhicule hybride, représenté à la figure 2, pour la mise en oeuvre du procédé, comporte en outre un moyen de commande 44, par exemple une unité de gestion de la chaîne de traction, permettant d'assurer un pilotage de la chaîne de traction thermique 50, de la chaîne de traction électrique arrière 60, de la batterie 40 pour répondre à différentes stratégies de pilotage du véhicule liées aux différentes situations de vie dudit véhicule.

Ces stratégies sont mises en oeuvre par le procédé de pilotage d'un véhicule hybride décrit par la suite.

Dans une première situation de vie, lorsque le véhicule hybride roule sur une route RT, entraîné par le seul moteur thermique 18, la puissance développée par le moteur thermique est liée à la demande du conducteur, c'est-à-dire à l'enfoncement de la pédale d'accélérateur.

S'il est nécessaire de recharger la batterie 40 avec une puissance donnée, la stratégie de pilotage, dans cette situation de vie, comporte une étape de recharge de la batterie 40 par la machine électrique arrière 68.

A cet effet, le procédé de pilotage du véhicule consiste :
- dans une première étape, à configurer la machine électrique arrière 68 en générateur de courant électrique et présente alors un couple résistif au niveau du train arrière 62. La machine électrique arrière transforme ensuite ce couple résistif en puissance électrique pour recharger la batterie 40 via le réseau électrique de puissance 74. Le couple résistif s'oppose ainsi au couple moteur produit par les roues motrices avant 14, 16 du véhicule, ce qui tend à ralentir le véhicule.
- dans une deuxième étape, à piloter le GMP et donc le moteur thermique 18 pour qu'il fournisse la puissance de traction nécessaire pour conserver la vitesse et l'accélération demandée par le conducteur et effectuer de plus, la recharge de la batterie 40.

Le moteur thermique doit fournir, dans cette deuxième étape, en plus du couple nécessaire à la traction du véhicule, un couple additionnel (ou une puissance additionnelle) pour compenser le couple résistif généré par le train arrière et recharger la batterie 40.

La figure 2 illustre cette première situation de vie :
La flèche f1 montre la transmission de puissance du moteur thermique vers les roues avant 14, 16 du véhicule roulant sur une route RT.

L'effort exercé par les roues avant 14, 16 du véhicule sur la route RT, entraînées par le moteur thermique 18 du fait des frottements des roues sur la route, produit le déplacement du véhicule et par conséquent le déplacement du train arrière qui est solidaire, comme le train avant, de la caisse du véhicule, et donc l'entraînement des roues arrière 34, 36 également en contact avec la route RT.

Il y a donc un transfert d'énergie entre le train avant et le train arrière via la route (flèche f2).

La flèche f3 montre la transmission d'énergie des roues arrière 34, 36 vers la machine électrique arrière 68 par l'intermédiaire du train arrière 62 et la transmission arrière 70.

La machine électrique arrière 68, entraînée en rotation par les roues arrière, fournit une énergie électrique à la batterie 40 via le réseau électrique de puissance 74 selon un sens de transfert représenté par les flèches f4 et f5.

Sur la figure 2 sont également représentés les différents efforts s'exerçant sur le véhicule hybride :
- un effort E-GMP transmis par le GMP dans le sens de déplacement du véhicule ;
- un effort E-CA résultant sur la caisse dans le sens de déplacement du véhicule ; et
- un effort E-RC généré par le train arrière, par la récupération d'énergie par la machine électrique arrière, dans le sens opposé au déplacement du véhicule.

La puissance additionnelle fournie par le moteur thermique 18, dans cette situation de vie, pour obtenir le couple résistif, est déterminée à partir de la puissance prélevée par la machine électrique arrière 68 (couple résistif) à laquelle est rajouté l'ensemble des pertes au niveau des transmissions avant 24 et arrière 70 et celles des pneumatiques des roues avant 14, 16 et arrière 34, 36.

Dans une deuxième situation de vie, lorsque le véhicule roule, entraîné par le moteur thermique 18 et, si le moteur thermique 18 est utilisé par le conducteur au maximum de son potentiel de puissance, il n'est plus possible de recharger la batterie 40 via la machine électrique arrière 68 sans dégrader la réponse du véhicule aux sollicitations du conducteur.

Le procédé de pilotage, dans cette deuxième situation de vie commande l'arrêt de la recharge de la batterie 40 par la machine électrique arrière 68.

A cet effet, le procédé de pilotage du véhicule consiste :
- dans une première étape ; à piloter la machine électrique arrière 68 pour annuler le prélèvement de couple résistif sur le train arrière 62.

La machine électrique arrière 68 ne fournit plus de courant de recharge à la batterie 40. Aucun couple résistif ne s'oppose au couple fourni par le moteur thermique 18 ; le véhicule dispose ainsi de sa capacité de puissance motrice maximum.
- dans une deuxième étape, à piloter le moteur thermique 18 pour fournir par le GMP et donc le moteur thermique 18, la puissance de traction nécessaire pour conserver la vitesse et l'accélération demandée par le conducteur.

Dans ces deux conditions de vie, le procédé de pilotage selon l'invention est mis en oeuvre, en toute transparence pour le conducteur.

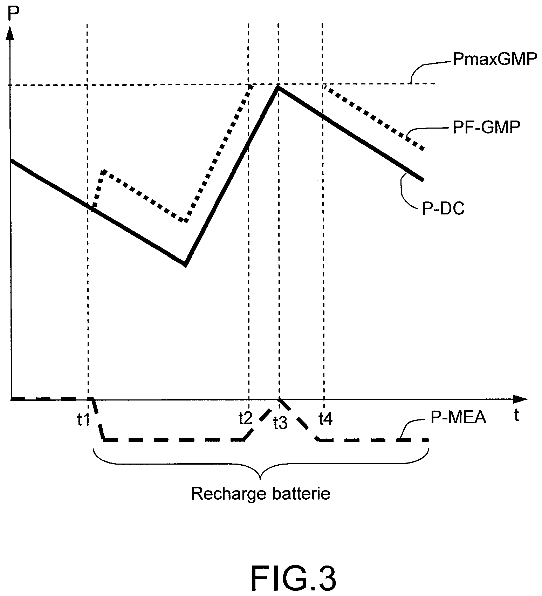

La figure 3 illustre les différentes étapes du procédé selon l'invention, par l'observation de l'évolution de la puissance en fonction du temps.
La courbe en trait plein représente la puissance demandée par le conducteur P-DC.
La courbe en pointillé représente la puissance totale PF-GMP fournie par le GMP sur le train avant.

La courbe en trait mixte représente la puissance P-MEA prélevée par la machine électrique arrière 68 pour la recharge de la batterie 40.

Avant le temps t1, la machine électrique arrière 68 ne fournit pas de courant de recharge à la batterie ; la puissance totale fournie par le GMP est la puissance demandée par le conducteur P-DC.

Au temps t1 (étape de recharge), la recharge de la batterie est pilotée. La puissance totale fournie par le GMP à partir du temps t1 est la puissance demandée par le conducteur P-DC ajoutée à la puissance P-MEA prélevée par la machine électrique arrière pour recharger la batterie aux différentes pertes près.

Entre le temps t1 et un temps suivant t2, la puissance demandée par le conducteur P-DC ajoutée à la puissance P-MEA, prélevée par la machine électrique arrière 68, est inférieure à la puissance maximum PmaxGMP du moteur thermique 18 ; la machine électrique arrière recharge la batterie 40 d'une valeur de courant nominal prédéfini.

Après le temps t2, la puissance demandée par le conducteur P-DC ajoutée à celle prélevée par la machine électrique arrière 68, dépasse la puissance maximum PmaxGMP pouvant être délivrée par le moteur thermique 18 ; la recharge de la batterie est progressivement diminuée pour maintenir la puissance totale fournie par le moteur thermique 18 à sa puissance maximum PmaxGMP jusqu'au temps t3 (étape d'arrêt de charge) atteignant la puissance maximum pouvant être fournie par le moteur thermique.

Au temps t3, la recharge de la batterie 40 est arrêtée.

Entre t3 et t4 la puissance demandée par le conducteur P-DC diminue progressivement ; la recharge de la batterie recommence progressivement jusqu'à la valeur nominale de courant de charge de façon à ce que la puissance totale PF-GMP fournie par le GMP ne dépasse pas la puissance maximum PmaxGMP pouvant être fournie par le moteur thermique 18.

Après le temps t4 la puissance demandée par le conducteur P-DC ajoutée à la puissance prélevée par la machine électrique P-MEA, devient inférieure à la puissance maximum PmaxGMP pouvant être fournie par le moteur. Le courant de recharge de la batterie est à nouveau à sa valeur nominale.

La transmission de puissance par la route, par l'utilisation du procédé de pilotage selon l'invention d'un véhicule hybride, permet d'exploiter au mieux la machine électrique 68 située sur le train arrière du véhicule, et de ne pas solliciter la machine électrique avant, couplé au moteur thermique, dans le processus de récupération d'énergie pour la recharge de la batterie. La capacité de génération électrique demandée à la machine électrique sur l'avant est largement diminuée puisque cette génération est assurée par la machine électrique arrière

Le coût de la machine est diminué et l'intégration facilitée (encombrement diminué, besoin de refroidissement plus faible)

## Revendications

1. Procédé de pilotage d'un véhicule hybride comportant :
- une chaîne de traction thermique (50) comportant un train avant (12), un moteur thermique (18) couplé par un organe de couplage (20) à une boîte de vitesses (22) destinée à transmettre au train avant (10), par une transmission avant (24), une puissance de traction du véhicule pour différents rapports de démultiplication de la boîte de vitesses, au moins une machine électrique avant (42, 46) couplée au moteur thermique (18) assurant au moins son démarrage,
- une chaîne de traction électrique (60) comportant un train arrière (62), au moins une machine électrique arrière (68) couplée mécaniquement, par une transmission arrière (70), au train arrière (62),
- au moins un réseau électrique de puissance (74) reliant la machine électrique arrière (68) à des moyens de stockage d'énergie électrique (40),
- un moyen de commande (44) pour piloter la chaîne de traction thermique (50), la chaîne de traction électrique (60), les moyens de stockage d'énergie électrique (40), pour tenir compte de toutes les situations de vie du véhicule,
**caractérisé en ce que** la chaîne de traction thermique (50), la chaîne de traction électrique (60), les moyens de stockage d'énergie (40), sont commandés via les moyens de commande (44) pour transmettre de la puissance fournie par la chaîne de traction thermique (50), via la route (RT) sur laquelle roule le véhicule, à la chaîne de traction électrique (60) pour recharger les moyens de stockage d'énergie (40), le procédé consistant lorsque le véhicule roule, entraîné par le moteur thermique (18), à piloter la machine électrique arrière (68) pour prélever, par le train arrière du véhicule (62), une partie de la puissance de traction du véhicule fournie par le moteur thermique (18) du véhicule tout en maintenant une vitesse et/ou une accélération demandée par le conducteur.

2. Procédé de pilotage selon la revendication 1, **caractérisé en ce qu'**il consiste :
- dans une première étape, à configurer la machine électrique arrière (68) en générateur de courant électrique et à partir du couple résistif induit, à transformer le couple résistif en puissance électrique pour recharger les moyens de stockage d'énergie (40) via le réseau électrique de puissance (74).
- dans une deuxième étape, à piloter la chaîne de traction thermique (50) pour qu'elle fournisse la puissance de traction nécessaire pour conserver la vitesse et l'accélération demandée par le conducteur et effectuer de plus, la recharge les moyens de stockage d'énergie (40).

3. Procédé de pilotage selon la revendication 2, **caractérisé en ce qu'**il consiste à commander la chaîne de traction thermique pour compenser le couple résistif, l'ensemble des pertes au niveau des transmissions avant (24) et arrière (70), et les pertes dues aux pneus des roues avant (14, 16) et arrière (34,36).

4. Procédé de pilotage selon les revendications 1 à 3, **caractérisé en ce que**, lorsque le moteur thermique (18) est utilisé par le conducteur, au maximum de son potentiel de puissance, le procédé comporte une étape d'arrêt de la recharge des moyens de stockage d'énergie (40) par la machine électrique arrière (68).

5. Procédé de pilotage selon la revendication 4, **caractérisé en ce que** l'étape d'arrêt de la recharge des moyens de stockage d'énergie (40) comporte les étapes suivantes consistant :
- dans une première étape, à piloter la machine électrique arrière (68) pour annuler le prélèvement de couple résistif sur le train arrière (62) ;
- dans une deuxième étape, à piloter la chaîne de traction thermique (50) pour fournir la puissance de traction nécessaire pour conserver la vitesse et l'accélération demandée par le conducteur.

## Patentansprüche

1. Steuerungsverfahren eines Hybridfahrzeugs, umfassend:
- einen thermischen Antriebsstrang (50), der eine Vorderachse (12), eine Brennkraftmaschine (18), die durch ein Kopplungsorgan (20) mit einem Schaltgetriebe (22) gekoppelt ist, das dazu bestimmt ist, an die Vorderachse (10) über ein vorderes Getriebe (24) eine Traktionsleistung des Fahrzeugs für unterschiedliche Untersetzungsverhältnisses des Schaltgetriebes zu übertragen, mindestens einen vorderen Elektromotor (42, 46), der mit der Brennkraftmaschine (18) gekoppelt ist, die mindestens deren Anlassen sicherstellt,
- einen elektrischen Antriebsstrang (60), der eine Hinterachse (62), mindestens einen hinteren Elektromotor (68), der mechanisch über ein hinteres Getriebe (70) mit der Hinterachse (62) gekoppelt ist, umfasst,
- mindestens ein elektrisches Stromnetz (74), das den hinteren Elektromotor (68) mit Energiespeichermitteln (40) verbindet,
- ein Steuermittel (44) zum Steuern des thermischen Antriebsstrangs (50), des elektrischen Antriebsstrangs (60), der Energiespeichermittel (40), um alle Lebenssituationen des Fahrzeugs zu berücksichtigen,
**dadurch gekennzeichnet, dass** der thermische Antriebsstrang (50), der elektrische Antriebsstrang (60), die Energiespeichermittel (40) über Steuermittel (44) gesteuert werden, um Leistung, die von dem thermischen Antriebsstrang (50) geliefert wird, über die Straße (RT), auf der das Fahrzeug fährt, zu dem elektrischen Antriebsstrang (60) zu übertragen, um die Energiespeichermittel (40) aufzuladen, wobei das Verfahren darin besteht, beim Fahren des Fahrzeugs, das von der Brennkraftmaschine (18) angetrieben wird, den hinteren Elektromotor (68) zu steuern, um durch die Hinterachse des Fahrzeugs (62) einen Teil der Traktionsleistung des Fahrzeugs, die von der Brennkraftmaschine (18) des Fahrzeugs geliefert wird, zu entnehmen, während eine Geschwindigkeit und/oder Beschleunigung, die vom Fahrer verlangt wird, aufrechterhalten wird.

2. Steuerungsverfahren nach Anspruch 1, **dadurch gekennzeichnet, dass** es aus Folgendem besteht:
- bei einem ersten Schritt, Konfigurieren des hinteren Elektromotors (68) als Stromgenerator und, ausgehend von dem induzierten Widerstandsmoment, das Widerstandsmoment in elektrische Leistung umzuwandeln, um die Energiespeichermittel (40) über das elektrische Leistungsnetzwerk (74) aufzuladen,
- bei einem zweiten Schritt, den thermischen Antriebsstrang (50) zu steuern, so dass er die Traktionsleistung liefert, die erforderlich ist, um die Geschwindigkeit und die Beschleunigung, die von dem Fahrer verlangt wird, zu wahren und außerdem das Aufladen der Energiespeichermittel (40) auszuführen.

3. Steuerungsverfahren nach Anspruch 2, **dadurch gekennzeichnet, dass** es darin besteht, den thermischen Antriebsstrang zu steuern, um das Widerstandsmoment, sämtliche Verluste im Bereich des vorderen Getriebes (24) und hinteren Getriebes (70) und die Verluste aufgrund der Vorderradreifen (14, 16) und Hinterradreifen (34, 36) auszugleichen.

4. Steuerungsverfahren nach den Ansprüchen 1 bis 3, **dadurch gekennzeichnet, dass**, wenn die Brennkraftmaschine (18) von dem Fahrer verwendet wird, das Verfahren am Maximum seiner Leistung einen Schritt des Stoppens des Aufladens der Energiespeichermittel (40) durch den hinteren Elektromotor (68) umfasst.

5. Steuerungsverfahren nach Anspruch 4, **dadurch gekennzeichnet, dass** der Schritt des Stoppens des Aufladens der Energiespeichermittel (40) die Schritte umfasst, die aus Folgendem bestehen:
- bei einem ersten Schritt, Steuern des hinteren Elektromotors (68), um das Entnehmen des Widerstandsmoments auf der Hinterachse (62) zu annullieren;
- bei einem zweiten Schritt, Steuern des thermischen Antriebsstrangs (50), um die Traktionsleistung zu liefern, die erforderlich ist, um die Geschwindigkeit und die Beschleunigung, die von dem Fahrer verlangt wird, zu wahren.

## Claims

1. A method for controlling a hybrid vehicle comprising:
- a thermal traction chain (50) comprising a front axle (12), a thermal engine (18) coupled by a coupling member (20) to a gearbox (22) intended for transmitting to the front axle (10), via a front transmission (24), a vehicle traction power for different gear reduction ratios of the gearbox, at least one front electric machine (42, 46) coupled to the thermal engine (18) ensuring at least the starting thereof,
- an electric traction chain (60) comprising a rear axle (62), at least one rear electric machine (68) mechanically coupled, via a rear transmission (70), to the rear axle (62),
- at least one electric power network (74) connecting the rear electric machine (68) to electrical energy storage means (40),
- a control means (44) for driving the thermal traction chain (50), the electric traction chain (60), the electrical energy storage means (40), in order to take into account all the life situations of the vehicle,
**characterized in that** the thermal traction chain (50), the electric traction chain (60), the energy storage means (40), are controlled via the control means (44) for transmitting power provided by the thermal traction chain (50), via the road (RT) on which the vehicle is travelling, to the electric traction chain (60) for recharging the energy storage means (40), the method consisting, when the vehicle is travelling, pulled by the thermal engine (18), in driving the rear electric machine (68) to draw, via the rear axle (62) of the vehicle, a portion of the traction power of the vehicle provided by the thermal engine (18) of the vehicle, whilst maintaining a speed and/or an acceleration required by the driver.

2. The method for controlling according to claim 1, **characterized in that** it consists:
- in a first step, in configuring the rear electric machine (68) as an electrical current generator and from the induced resistive torque, in transforming the resistive torque into electric power for recharging the energy storage means (40) via the electric power network (74),
- in a second step, in driving the thermal traction chain (50) so that it provides the traction power necessary for preserving the speed and the acceleration required by the driver and for carrying out, in addition, the recharging of the energy storage means (40).

3. The method for controlling according to claim 2, **characterized in that** it consists in controlling the thermal traction chain for compensating the resistive torque, the whole of the losses at the level of the front (24) and rear (70) transmissions, and the losses due to the tyres of the front wheels (14, 16) and rear wheels (34, 36).

4. The method for controlling according to claims 1 to 3, **characterized in that**, when the thermal engine (18) is used by the driver, at the maximum of its power potential, the method comprises a step of stopping of the recharging of the energy storage means (40) by the rear electric machine (68).

5. The method for controlling according to claim 4, **characterized in that** the step of stopping of the recharging of the energy storage means (40) comprises the following steps consisting:
- in a first step, in controlling the rear electric machine (68) to cancel the drawing of resistive torque on the rear axle (62);
- in a second step, in controlling the thermal traction chain (50) for providing the necessary traction power for preserving speed and the acceleration required by the driver.
